# FASCICULE DE BREVET EUROPEEN

(11) **EP 2 920 492 B1**
(45) Date de publication et mention de la délivrance du brevet: **14.12.2022**
(21) Numéro de dépôt: 13785555.7
(22) Date de dépôt: 14.10.2013
(51) Int. Cl.: F16H 57/04

(54) **DIFFÉRENTIEL DE VÉHICULE AUTOMOBILE COMPORTANT UN CARTER MUNI DE MOYENS DE RÉCUPÉRATION D'HUILE**
DIFFERENTIAL FÜR KRAFTFAHRZEUGE MIT EINEM GEHÄUSE MIT EINEM ÖLRÜCKGEWINNUNGSMITTEL
MOTOR VEHICLE DIFFERENTIAL COMPRISING A HOUSING PROVIDED WITH OIL RECOVERY MEANS

(30) Priorité: 13.11.2012 FR 1260762
(43) Date de publication de la demande: 23.09.2015
(73) Titulaire: Renault s.a.s, 92100 Boulogne Billancourt (FR)
(72) Inventeur: GIRARDOT, Vincent, F-91430 Igny (FR); COULON, Damien, F-92260 Fontenay Aux Roses (FR); LELEU, Mathieu, 78112 Fourqueux (FR)
(74) Mandataire: Novagraaf Technologies
(86) Numéro de dépôt international: PCT/FR2013/052447
(87) Numéro de publication internationale: WO 2014/076382

(56) Documents cités:
- WO-A1-90/11907
- DE-B- 1 264 974
- GB-A- 590 867
- JP-A- 2005 106 178

## Description

L'invention concerne un différentiel de véhicule automobile.

L'invention concerne plus particulièrement un différentiel de véhicule automobile comprenant un carter et un mécanisme de différentiel sensiblement axial, qui est porté dans le carter par deux paliers opposés et qui comporte au moins une couronne dentée accolée à une cage de pignons satellites, ledit carter comportant d'une part un premier demi-carter qui comporte un premier palier et qui est apte à abriter la cage de pignons et au moins une partie de la couronne, et d'autre part un second demi-carter qui comporte un second palier et qui est apte à fermer le premier demi-carter, le premier demi-carter comportant au moins un logement apte à abriter la cage de pignons et une cloche, dans laquelle débouche ledit logement, qui abrite au moins une partie de la couronne, et qui comporte au moins une paroi principale adjacente à une face transversale de la couronne.

On connaît de nombreux exemples de différentiels de ce type.

Conventionnellement, une fois que le mécanisme de différentiel est monté dans les deux demi-carters et que les deux demi-carters sont réunis pour former un carter, ledit carter est rempli d'une huile de lubrification qui permet d'assurer la lubrification de la cage de pignons par barbotage.

A cet effet, le niveau de l'huile dans le carter est fixé sensiblement au niveau de l'axe du mécanisme de différentiel ou axe de rotation de la couronne, selon la règle qui veut que le niveau de lubrifiant est fixé au niveau de l'élément roulant le plus bas.

Tant que le différentiel tourne à une vitesse inférieure à une vitesse déterminée, la lubrification de la cage de pignons est assurée par barbotage, la cage de pignons plongeant dans l'huile de lubrification. La cage est à cet effet une cage ouverte qui permet à l'huile de baigner les pignons.

Toutefois, une telle conception présente un inconvénient dès lors que le différentiel tourne à des vitesses élevées.

En effet, au-delà d'une vitesse déterminée, l'huile de lubrification est centrifugée par la couronne et est projetée contre les parois du carter et notamment les parois des demi-carters d'où elle s'écoule lentement par ruissellement en ne retournant que lentement vers le fond du logement. De ce fait, le niveau d'huile présent dans le logement recevant la cage de pignons devient insuffisant et inapte à assurer la lubrification par barbotage de ladite cage de pignons.

Ce défaut de lubrification peut, alors même que le niveau d'huile semble satisfaisant à l'arrêt, entraîner à plus ou moins longue échéance la destruction des éléments tournants du différentiel par manque d'huile.

L'invention remédie à cet inconvénient en proposant un différentiel comportant des moyens de récupération de l'huile projetée et de redirection de cette huile vers la cage de pignons.

Le document JP2005 106178A divulgue un différentiel selon le préambule de la revendication dans lequel le premier demi-carter comporte :
- un moyen de récupération de l'huile projetée sur la paroi par la couronne qui comporte une première niche qui débouche dans la paroi principale et qui comporte deux parois radiales axiales, une paroi radiale transversale, et deux parois tangentielles intérieure et extérieure qui délimitent un réservoir d'huile, et
- un moyen de redirection de l'huile récupérée dans la cage de pignons satellites.
Le différentiel selon l'invention est caractérisé en ce que le moyen de redirection de l'huile récupérée comporte une seconde niche accolée à la première niche, communiquant avec ladite première niche, dont une paroi tangentielle intérieure comporte une lumière tournée vers la cage de pignons satellites.
Selon d'autres caractéristiques de l'invention :
- une nervure agencée dans le prolongement d'une première paroi radiale axiale fait saillie à partir de la paroi principale pour collecter l'huile projetée et la diriger dans le réservoir de la première niche,
- une deuxième paroi radiale axiale s'étend radialement suivant une partie réduite de l'encombrement radial de la niche, pour délimiter avec la paroi tangentielle extérieure opposée un passage d'huile communiquant avec la seconde niche.
- la seconde niche débouche dans la paroi principale et elle comporte :
   - la deuxième paroi radiale axiale commune avec la première niche,
   - une paroi radiale transversale,
   - une paroi tangentielle extérieure,
   - la lumière tournée vers l'axe du mécanisme de différentiel,
   - une troisième paroi axiale qui comporte une partie extérieure radiale axiale et une partie intérieure formant un angle déterminé avec la direction radiale, dont un bord intérieur coïncide avec au moins un bord de la lumière pour canaliser l'huile collectée vers la cage de pignons satellites,
- la partie intérieure de la troisième paroi axiale de la seconde niche forme un angle de sensiblement dix degrés avec la direction radiale,
- la lumière formée dans la paroi tangentielle intérieure présente sensiblement la forme d'une découpe trapézoïdale comportant un bord tangentiel et deux bords dont l'un coïncide avec le bord intérieur de la partie intérieure de la troisième paroi axiale.

D'autres caractéristiques et avantages de l'invention apparaîtront à la lecture de la description détaillée qui suit pour la compréhension de laquelle on se reportera aux dessins annexés dans lesquels :
- la figure 1 est une vue de face d'un demi-carter de différentiel selon l'invention ;
- la figure 2 est une vue de détail en perspective des moyens de récupération et de redirection de l'huile du demi-carter de la figure 1 ;
- la figure 3 est une autre vue des moyens de récupération et de redirection de l'huile du demi-carter de la figure 1 ;
- la figure 4 est une vue en coupe axiale du demi-carter de la figure 1 recevant le mécanisme de différentiel ;
- la figure 5 est une vue en perspective du mécanisme de différentiel.

Dans la description qui va suivre, des chiffres ou des références identiques désignent des pièces identiques ou ayant des fonctions similaires.

Par "direction axiale" on entendra la direction correspondant à l'axe du mécanisme de différentiel.

Par "direction radiale" on entendra toute direction perpendiculaire à la direction axiale.

Par "direction transversale" on entendra toute direction comprise dans un plan perpendiculaire à la direction axiale.

Par "direction tangentielle" on entendra toute direction comprise dans un plan perpendiculaire à la direction radiale.

Par "intérieur" on désignera un élément proche de l'axe de rotation du mécanisme de différentiel.

Par "extérieur" on désignera un élément distant de l'axe de rotation du mécanisme de différentiel.

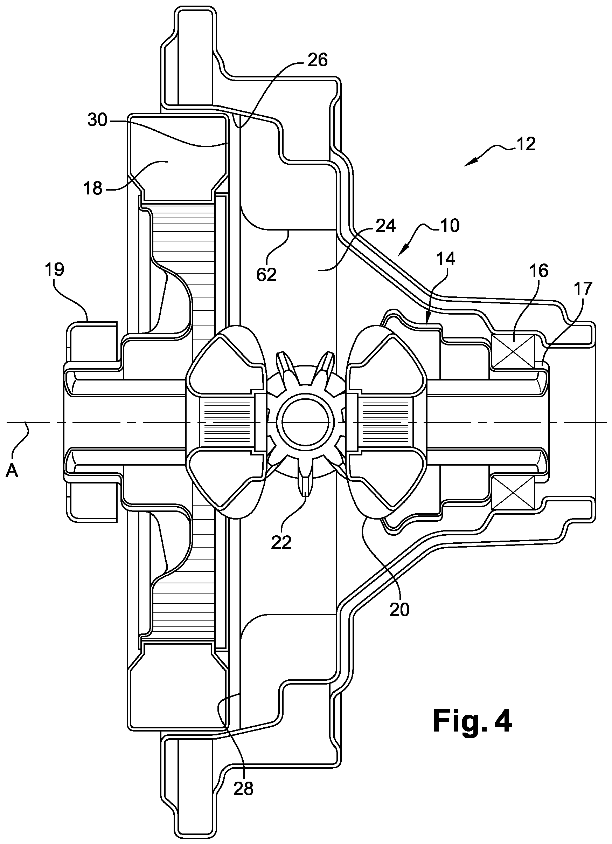

On a représenté à la figure 4 un demi-carter 10 d'un différentiel 12 de véhicule automobile.

De manière connue, un différentiel 12 comporte un carter formé de deux demi-carters comportant le demi-carter 10 et un autre demi-carter (non représenté) fermant le demi-carter 10. Un mécanisme de différentiel 14 est porté à rotation autour d'un axe "A" dans les deux demi-carters par deux paliers opposés.

Ainsi, le demi-carter 10 comporte à cet effet un premier palier 16 qui est apte à recevoir une première extrémité 17 du mécanisme 14 de différentiel, comme représenté à la figure 4.

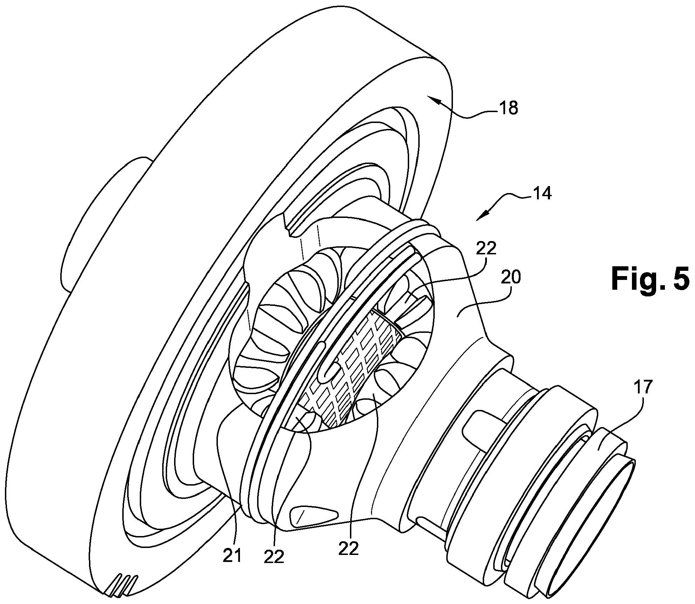

De manière connue, comme l'illustre la figure 5, le mécanisme 14 comporte au moins une couronne dentée 18 qui accolée à une cage 20 recevant des pignons satellites 22. La cage 20 de pignons est ouverte et elle comporte à cet effet des fenêtres 21 permettant à l'huile d'y pénétrer.

Le demi-carter 10 abrite la cage 20 de pignons 22 et au moins une partie de la couronne 18.

Le second demi-carter (non représenté) comporte de la même façon un second palier (non représenté) qui est apte à recevoir l'autre extrémité 19 du mécanisme 14 du différentiel et qui est apte à fermer le premier demi-carter 10.

De manière connue, le premier demi-carter 10 comporte au moins un logement 24 apte à abriter la cage 20 de pignons 22 et à recevoir l'huile de lubrification. Le logement 24 débouche axialement dans une cloche 26 qui abrite au moins une partie de la couronne 18, ladite cloche 26 comportant au moins une paroi principale 28 transversale qui est adjacente à une face 30 transversale de la couronne 18.

L'inconvénient connu en soi d'une telle conception conforme à l'état de la technique est un défaut de lubrification des pignons satellites 22 dès lors que le mécanisme 14 de différentiel atteint des vitesses élevées de rotation.

En effet, le différentiel 12 est conventionnellement lubrifié par de l'huile qui remplit ledit carter selon un niveau correspondant sensiblement à l'axe "A" de rotation du mécanisme 14 de différentiel de manière à le lubrifier par barbotage.

Comme pour tout mécanisme tournant, le niveau d'huile adéquat pour une lubrification par barbotage est fixé comme étant celui de l'élément tournant le plus bas, ici celui du mécanisme 14 de différentiel.

Lors du fonctionnement du différentiel 12 à des vitesses élevées, et donc lors de la rotation de la couronne 18 à des vitesses élevées, il se peut que le mécanisme de différentiel 14, et plus particulièrement la couronne 18, centrifuge l'huile jusqu'à ce qu'elle ruisselle sur les parois du carter, et plus particulièrement sur les parois du demi-carter 10.

Ceci entraîne un déficit en huile de barbotage au niveau du logement 24 et plus particulièrement de la cage 20 de pignons satellites 22, ce qui peut conduire à une détérioration desdits pignons 22 et/ou de leurs paliers (non représentés). Ainsi, lors du fonctionnement du différentiel 12 à des vitesses élevées, le niveau d'huile est à même de descendre en dessous de l'axe "A".

Il importe donc de remédier à cette difficulté en assurant un approvisionnement continu en huile de la cage 20 de pignons satellites 22 afin d'éviter leur détérioration.

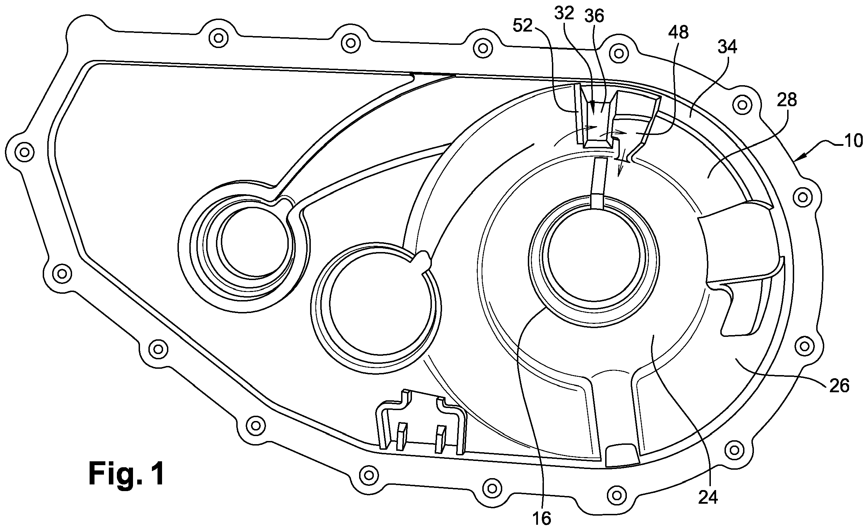

Dans ce but, l'invention propose un différentiel 12 de véhicule automobile du type décrit précédemment, caractérisé en ce que le premier demi-carter 10 comporte un moyen 32 de récupération de l'huile projetée sur la paroi 28 principale adjacente à la couronne 18 par ladite couronne 18, et un moyen 34 de redirection de l'huile récupérée vers la cage 20 de pignons satellites 22, comme cela est illustré à la figure 1.

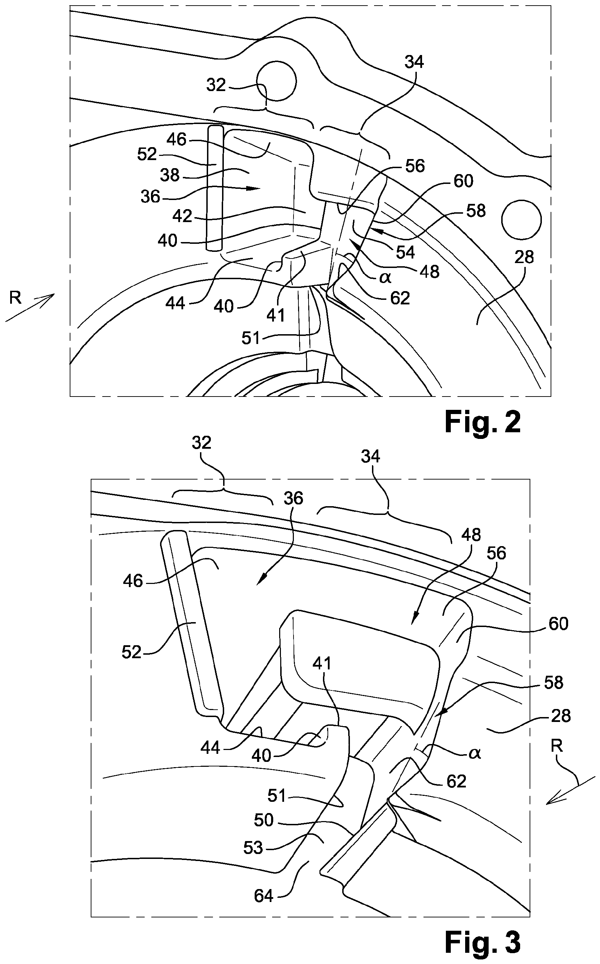

Plus particulièrement, comme l'illustrent plus en détails les figures 2 et 3, le moyen 32 de récupération de l'huile comporte une première niche 36 qui débouche dans la paroi principale 28 et qui comporte deux parois radiales axiales 38 et 40, une paroi radiale transversale 42, deux parois tangentielles intérieure 44 et extérieure 46 qui délimitent un réservoir d'huile.

Par ailleurs, le moyen 34 de redirection de l'huile récupérée comporte une seconde niche 48 qui est accolée à la première niche 36 et qui communique avec ladite première niche 36. La seconde niche 48 comporte une lumière 53 qui est tournée vers la cage 20 de pignons satellites 22.

Ainsi, comme l'illustrent les flèches de la figure 1, l'huile centrifugée par la couronne dentée 18 du mécanisme 14 de différentiel s'accumule dans la première niche 36. La première niche 36 communiquant avec la seconde niche 48, l'huile accumulée passe dans la seconde niche 48 puis est déversée par l'intermédiaire de la lumière 53 vers la cage 20 de pignons satellites 22.

Pour permettre une collecte efficace de l'huile centrifugée par la couronne dentée 18, une nervure 52 agencée dans le prolongement de la première paroi radiale axiale 38 fait saillie à partir de la paroi principale transversale 28 de manière à racler l'huile projetée par la couronne 18, la collecter et la diriger dans le réservoir de la première niche 36, la couronne 18 tournant dans un sens anti-horaire selon la figure 1 lorsque le véhicule roule en marche avant à des vitesses élevées, cas selon lequel la couronne 18 est susceptible de centrifuger l'huile de lubrification.

Pour permettre la communication entre la première niche 36 et la seconde niche 48, la deuxième paroi radiale axiale 40 s'étend radialement suivant seulement une partie de l'encombrement radial de la niche 48 de manière que son bord libre 41 délimite avec la paroi tangentielle opposée extérieure 46 un passage d'huile communiquant avec la seconde niche 48.

Ainsi, la seconde niche 48 communique avec la première niche 36 par l'intermédiaire de ce passage d'huile.

La seconde niche 48 débouche par ailleurs dans la paroi principale 28.

La seconde niche 48 comporte la deuxième paroi radiale axiale 40 commune avec la première niche 36, une paroi radiale transversale 54, une paroi tangentielle extérieure 56 et elle est ouverte vers l'axe du mécanisme 10 par l'intermédiaire d'une lumière 53 qui est tournée vers l'axe du mécanisme de différentiel 14, et qui comporte deux bords 50, 51.

Pour canaliser l'huile en provenance de la première niche 36 vers la lumière 53, comme l'illustre la figure 3, une troisième paroi axiale 58 de la seconde niche 48 comporte une partie extérieure radiale axiale 60 et une partie intérieure 62 qui forme un angle "α" déterminé avec la direction radiale "R".

Un bord intérieur de cette partie intérieure 62 coïncide avec au moins un bord 50 de la lumière 53 de manière à canaliser l'huile vers la cage 20 de pignons satellites 22.

Avantageusement, la partie intérieure 62 de la troisième paroi axiale 54 de la seconde niche 48 forme un angle "α" de sensiblement 10° avec la direction radiale "R".

Enfin, la lumière 53 présente sensiblement la forme d'une découpe trapézoïdale comportant un bord tangentiel 64 et deux bords 50, 51 dont notamment le bord 50 qui coïncide avec le bord intérieur de la partie intérieure 62 de la troisième paroi axiale 54.

Par ailleurs, la partie intérieure 62 de la troisième paroi axiale forme avec le logement 24 un angle qui assure un écoulement vertical du flux d'huile issu du moyen de redirection 34.

Sans cet angle, le flux d'huile s'écoulerait sur la paroi du logement 24 et ne tomberait pas entièrement vers le mécanisme 22.

Ainsi, lorsque le différentiel 14 tourne à une vitesse élevée, le volume de lubrifiant projeté par l'action de la force centrifuge est raclé par la nervure 52 ce qui créé un flux de lubrifiant de nature à remplir la première niche 36. Lorsque le niveau de lubrifiant dépasse le bord libre 41 de la paroi 40, l'huile déborde par-dessus la paroi 40 pour pénétrer dans la deuxième niche 48 et tomber ensuite par gravité à travers la lumière 53 vers le mécanisme de différentiel.

Dans une variante (non représentée) de l'invention, la cavité 32 pourrait être reliée à la face arrière du palier 16 par un perçage en biais partant de la face 36 à travers le demi-carter 10. Cette configuration permettrait de lubrifier le palier 16 et le contact entre la première extrémité 17 du mécanisme 14 de différentiel et la portée de la transmission de sortie de couple.

Dans une autre variante, les cavités 32 et 34 pourraient être fusionnées en une seule cavité.

L'invention permet donc avantageusement de collecter l'huile centrifugée par la couronne 18 d'un mécanisme 14 de différentiel dans un différentiel 12 de véhicule automobile et de la rediriger vers la cage 20 de pignons satellites 22 afin d'en assurer la lubrification, quelle que soit la vitesse de rotation du mécanisme 14 de différentiel.

## Revendications

1. Différentiel (12) de véhicule automobile comprenant un carter et un mécanisme (14) de différentiel sensiblement axial, qui est porté dans le carter par deux paliers opposés (16) et qui comporte au moins une couronne dentée (18) accolée à une cage (20) de pignons satellites (22),
ledit carter comportant d'une part un premier demi-carter (10) qui comporte un premier palier (16) et qui est apte à abriter la cage (20) de pignons (22) et au moins une partie de la couronne (18), et d'autre part un second demi-carter qui comporte un second palier et qui est apte à fermer le premier demi-carter (10),
le premier demi-carter (10) comportant au moins un logement (24) apte à abriter la cage (20) de pignons (22) et une cloche (26), dans laquelle débouche ledit logement (24), qui abrite au moins une partie de la couronne (18), et qui comporte au moins une paroi transversale principale (28) adjacente à une face (30) transversale de la couronne (18),
dans lequel le premier demi-carter (10) comporte:
- un moyen (32) de récupération de l'huile projetée sur la paroi (28) par la couronne (18) qui comporte une première niche (36) qui débouche dans la paroi principale (28) et qui comporte deux parois radiales axiales (38, 40), une paroi radiale transversale (42), et deux parois tangentielles intérieure (44) et extérieure (46) qui délimitent un réservoir d'huile, et
- un moyen (34) de redirection de l'huile récupérée vers la cage (20) de pignons satellites (22),
**caractérisé en ce que** le moyen (34) de redirection de l'huile récupérée comporte une seconde niche (48) accolée à la première niche (36), communiquant avec ladite première niche (36), qui comporte une lumière (53) tournée vers la cage (20) de pignons satellites (22).

2. Différentiel (12) selon la revendication 1, **caractérisé en ce qu'**une nervure (52) agencée dans le prolongement d'une première paroi radiale axiale (38) fait saillie à partir de la paroi principale (28) pour collecter l'huile projetée et la diriger dans le réservoir de la première niche (36).

3. Différentiel (12) selon la revendication précédente, **caractérisé en ce qu'**une deuxième paroi radiale axiale (40) s'étend radialement suivant une partie réduite de l'encombrement radial de la niche (48), pour délimiter avec la paroi tangentielle extérieure opposée (46) un passage d'huile communiquant avec la seconde niche (48).

4. Différentiel (12) selon la revendication 3, **caractérisé en ce que** la seconde niche (48) débouche dans la paroi principale (28) et **en ce qu'**elle comporte :
- la deuxième paroi radiale axiale (40) commune avec la première niche (36),
- une paroi radiale transversale (54),
- une paroi tangentielle extérieure (56),
- la lumière 53 tournée vers l'axe du mécanisme (14),
- une troisième paroi axiale (58) qui comporte une partie extérieure radiale axiale (60) et une partie intérieure (62) formant un angle (α) déterminé avec la direction radiale (R), dont un bord intérieur coïncide avec au moins un bord (50) de la lumière 53, pour canaliser l'huile collectée vers la cage (20) de pignons satellites (22).

5. Différentiel selon la revendication précédente, **caractérisé en ce que** la partie intérieure (62) de la troisième paroi axiale (58) de la seconde niche (48) forme un angle (α) de sensiblement 10 degrés avec la direction radiale (R).

6. Différentiel selon l'une des revendications 4 ou 5, **caractérisé en ce que** la lumière 53 formée dans la paroi tangentielle intérieure présente sensiblement la forme d'une découpe trapézoïdale comportant un bord tangentiel (64) et deux bords (50, 51) dont l'un (50) coïncide avec le bord intérieur de la partie intérieure (62) de la troisième paroi axiale (54).

## Patentansprüche

1. Kraftfahrzeugdifferential (12) mit einem Gehäuse und einem im Wesentlichen axialen Differentialmechanismus (14), der in dem Gehäuse von zwei gegenüberliegenden Lagern (16) getragen wird und der mindestens einen Zahnkranz (18) umfasst, der an einen Käfig (20) von Planetenrädern (22) angebaut ist,
wobei das Gehäuse einerseits eine erste Gehäusehälfte (10) umfasst, die ein erstes Lager (16) umfasst und die geeignet ist, den Käfig (20) von Zahnrädern (22) und mindestens einen Teil des Zahnkranzes (18) aufzunehmen, und andererseits eine zweite Gehäusehälfte, die ein zweites Lager umfasst und die geeignet ist, die erste Gehäusehälfte (10) zu schließen,
wobei die erste Gehäusehälfte (10) mindestens eine Aufnahme (24) aufweist, die geeignet ist, den Käfig (20) von Zahnrädern (22) und eine Glocke (26) aufzunehmen, in die die Aufnahme (24) mündet, die mindestens einen Teil des Kranzes (18) aufnimmt und die mindestens eine Hauptquerwand (28) aufweist, die an eine Querfläche (30) des Kranzes (18) angrenzt,
wobei die erste Gehäusehälfte (10) umfasst:
- ein Mittel (32) zum Auffangen des durch den Kranz (18) auf die Wand (28) gespritzten Öls, das eine erste Nische (36) umfasst, die in der Hauptwand (28) mündet und die zwei axiale radiale Wände (38, 40), eine radiale Querwand (42) und zwei tangentiale innere (44) und äußere (46) Wände umfasst, die ein Ölreservoir begrenzen, und
- ein Mittel (34) zum Umleiten des aufgefangenen Öls zum Käfig (20) der Satellitenräder (22),
**dadurch gekennzeichnet, dass** das Mittel (34) zur Umleitung des gewonnenen Öls eine zweite Nische (48) umfasst, die an die erste Nische (36) angefügt ist und mit der ersten Nische (36) in Verbindung steht, die ein Licht (53) umfasst, das dem Käfig (20) der Satellitenritzel (22) zugewandt ist.

2. Differential (12) nach Anspruch 1, **dadurch gekennzeichnet, dass** eine Rippe (52), die in der Verlängerung einer ersten axialen Radialwand (38) angeordnet ist, von der Hauptwand (28) vorsteht, um das verspritzte Öl zu sammeln und es in den Behälter der ersten Nische (36) zu leiten.

3. Differential (12) nach dem vorhergehenden Anspruch, **dadurch gekennzeichnet, dass** eine zweite axiale radiale Wand (40) sich radial entlang eines reduzierten Teils des radialen Raumbedarfs der Nische (48) erstreckt, um mit der gegenüberliegenden tangentialen äußeren Wand (46) einen Öldurchgang zu begrenzen, der mit der zweiten Nische (48) in Verbindung steht.

4. Differential (12) nach Anspruch 3, **dadurch gekennzeichnet, dass** die zweite Nische (48) in die Hauptwand (28) mündet und dass sie umfasst :
- die zweite axiale radiale Wand (40), die mit der ersten Nische (36) gemeinsam ist,
- eine radiale Querwand (54),
- eine äußere tangentiale Wand (56),
- das Lumen (53), das der Achse des Mechanismus (14) zugewandt ist,
- eine dritte axiale Wand (58), die einen axialen radialen Außenteil (60) und einen Innenteil (62) aufweist, der einen bestimmten Winkel (alpha) mit der radialen Richtung (R) bildet, wobei ein Innenrand davon mit mindestens einem Rand (50) des Lumens (53) zusammenfällt, um das gesammelte Öl zum Käfig (20) der Planetenräder (22) zu kanalisieren.

5. Differentialgetriebe nach dem vorhergehenden Anspruch, **dadurch gekennzeichnet, dass** der innere Teil (62) der dritten axialen Wand (58) der zweiten Nische (48) einen Winkel (alpha) von im Wesentlichen 10 Grad mit der radialen Richtung (R) bildet.

6. Differential nach einem der Ansprüche 4 oder 5, **dadurch gekennzeichnet, dass** die in der inneren Tangentialwand ausgebildete Öffnung (53) im Wesentlichen die Form eines trapezförmigen Ausschnitts mit einer Tangentialkante (64) und zwei Kanten (50, 51) aufweist, von denen eine (50) mit der Innenkante des inneren Teils (62) der dritten Axialwand (54) zusammenfällt.

## Claims

1. A motor vehicle differential (12) comprising a casing and a substantially axial differential mechanism (14), which is carried in the casing by two opposite bearings (16) and which comprises at least one ring gear (18) adjoining a cage (20) of planet pinions (22)
the said housing comprising, on the one hand, a first half-casing (10) which comprises a first bearing (16) and which is capable of housing the cage (20) of pinions (22) and at least part of the ring gear (18), and, on the other hand, a second half-casing which comprises a second bearing and which is capable of closing the first half-casing (10)
the first half-casing (10) comprising at least one housing (24) able to house the cage (20) of pinions (22) and a bell (26), into which said housing (24) opens, which houses at least part of the ring gear (18), and which comprises at least one main transverse wall (28) adjacent to a transverse face (30) of the ring gear (18)
wherein the first half housing (10) includes:
- a means (32) for recovering the oil sprayed onto the wall (28) by the ring gear (18) which comprises a first recess (36) which opens into the main wall (28) and which comprises two axial radial walls (38, 40), a transverse radial wall (42), and two inner (44) and outer (46) tangential walls which delimit an oil reservoir, and
- means (34) for redirecting the recovered oil to the cage (20) of planet gears (22),
**characterized in that** the means (34) for redirecting the recovered oil comprises a second recess (48) adjoining the first recess (36), communicating with said first recess (36), which comprises a slot (53) facing the cage (20) of planet gears (22).

2. A differential (12) according to claim 1, **characterized in that** a rib (52) arranged as an extension of a first axial radial wall (38) protrudes from the main wall (28) to collect the sprayed oil and direct it into the reservoir of the first niche (36).

3. A differential (12) according to the preceding claim, **characterized in that** a second axial radial wall (40) extends radially along a reduced portion of the radial footprint of the recess (48), to define with the opposite outer tangential wall (46) an oil passage communicating with the second recess (48).

4. Differential (12) according to claim 3, **characterized in that** the second niche (48) opens into the main wall (28) and **in that** it comprises:
- the second axial radial wall (40) common with the first niche (36),
- a transverse radial wall (54),
- an external tangential wall (56),
- the slot (53) turned towards the axis of the mechanism (14),
- a third axial wall (58) which comprises an outer radial axial portion (60) and an inner portion (62) forming a determined angle (alpha) with the radial direction (R), an inner edge of which coincides with at least one edge (50) of the aperture (53), in order to channel the collected oil towards the cage (20) of planet gears (22)

5. The differential according to the preceding claim, **characterized in that** the inner portion (62) of the third axial wall (58) of the second recess (48) forms an angle (alpha) of substantially 10 degrees with the radial direction (R).

6. A differential according to one of claims 4 or 5, **characterized in that** the aperture 53 formed in the inner tangential wall has substantially the shape of a trapezoidal cutout having a tangential edge (64) and two edges (50, 51), one of which (50) coincides with the inner edge of the inner portion (62) of the third axial wall (54).
